(19) **Europäisches Patentamt**
**European Patent Office**
**Office européen des brevets**

(11) **EP 0 961 446 B1**

(12) **FASCICULE DE BREVET EUROPEEN**

(45) Date de publication et mention
de la délivrance du brevet:
**13.08.2008 Bulletin 2008/33**

(51) Int Cl.:
***H04L 12/56*** *(2006.01)* ***H04Q 11/04*** *(2006.01)*

(21) Numéro de dépôt: **99401269.8**

(22) Date de dépôt: **27.05.1999**

(54) **Contrôle de congestion dans un noeud ATM**

Überlastregelung in einem ATM Knotenpunkt

Congestion control in an ATM node

(84) Etats contractants désignés:
**AT CH DE ES GB IT LI**

(30) Priorité: **28.05.1998 FR 9806766**

(43) Date de publication de la demande:
**01.12.1999 Bulletin 1999/48**

(73) Titulaire: **Alcatel Lucent**
**75008 Paris (FR)**

(72) Inventeur: **Milles, Olivier**
**92130 Issy les Moulineaux (FR)**

(74) Mandataire: **Sciaux, Edmond et al**
**Alcatel Lucent**
**Intellectual Property & Standards**
**54 Rue La Boétie**
**75008 Paris (FR)**

(56) Documents cités:
**WO-A-96/29806 US-A- 5 724 513**

**Description**

La présente invention a pour objet un procédé de contrôle de la congestion dans un noeud d'un système de transmission asynchrone.

L'invention concerne les transmission en mode asynchrone, appelées dans la suite ATM, pour l'acronyme de l'anglais Asynchronous Transfer Mode. Dans un tel mode de transmission, des cellules de taille fixe sont transmises, dans un mode orienté connexion. L'établissement d'une connexion s'effectue par marquage d'un chemin, i.e. d'une chaîne d'identifiants. Localement, on n'utilise dans un noeud ATM qu'un identifiant local d'un utilisateur appelé VPVC ou virtual path virtual channel; on procède dans chaque noeud à une translation locale des identifiants pour transmettre les paquets. Pour plus de détail sur la structure et le fonctionnement de l'ATM, on pourra se reporter aux travaux de l'ITU, de l'ATM Forum ou de l'ETSI.

L'ATM est actuellement utilisé comme support de couche 2 dans le modèle ISO pour le protocole internet ou IP. A cette fin est prévue une couche d'adaptation IP-ATM, connue sous l'acronyme AAL-5 (ATM Adapatation Layer). Sous AAL-5, le transport d'un paquet IP s'effectue en segmentant le paquet IP en cellules ATM; une recommandation ITU propose d'introduire dans l'en-tête des cellules ATM un bit représentatif de la fin du paquet IP, i. e. de la dernière cellule ATM d'un paquet IP. Ce bit noté bit AUU (ATM User to User indication) permet de repérer la fin d'un paquet IP; il permet aussi de repérer le début d'un paquet IP, dans la mesure où la cellule ATM suivant une cellule avec un bit AUU à 1 correspond au début d'un paquet IP. Ces fonctionnalités d'AAL-5 sont documentées dans ITU-T 1361, BiSDN ATM Layer Specification, Helsinki, Mars 1993.

Un des problèmes rencontrés en ATM est le contrôle de congestion au niveau des noeuds. L'avantage d'un mode ATM est la flexibilité en débit, du fait du caractère asynchrone de la transmission; localement, dans un noeud présentant des ressources finies, cette flexibilité induit des problèmes de contrôle des congestions.

Diverses solutions au problème du contrôle des congestions ont été proposées. La première solution consiste à ne pas contrôler la congestion dans les noeuds, i. e. de multiplexer à l'aveugle les cellules entrantes. Cette solution a un coût en ressources important pour assurer des performances. De nouveaux modèles de service tentent de fournir des solutions plus adaptées, notamment des solutions dites de "best efforts", qui prennent en compte que tous les types d'application n'ont pas nécessairement besoin de la même qualité de service. Ont été suggérées, notamment sous l'impulsion de l'ATM Forum des solutions de "packet discard" (destruction de paquet) ou de "frame discard" (destruction de trame).

Une solution proposée dans le document ATM Forum Traffic Management Specification 4.0 est appelée Tail Packet Discard ou TPD. Cette solution consiste, lorsqu'une cellule est rejetée ou détruite du fait d'un débordement d'un tampon, à rejeter ou détruire toutes les cellules suivantes jusqu'à la fin du paquet. Cette solution est mise en oeuvre en utilisant le bit AUU pour repérer la fin d'un paquet: après la destruction d'une cellule, on détruit toutes les cellules suivantes présentant le même VPVC, jusqu'à ce que l'on détruise une cellule dont le bit AUU est validé, qui est la fin d'un paquet. Cette solution permet de récupérer de la place dans le tampon, étant entendu qu'un paquet dont une cellule a été supprimée est inutilisable pour l'application.

Une autre solution proposée dans le document ATM Forum Trafic Management Group Living List, December 1997, pages 18-20 est appelée Early Packet Discard ou EPD. L'idée de cette solution est de décider dès le début de la réception d'un paquet si les cellules qui composent le paquet doivent être acceptées ou non, en fonction de la place disponible dans le tampon lors de la réception de la première cellule. A cet effet, on définit dans le tampon un seuil d'EPD. Lorsque la première cellule d'un paquet arrive dans le tampon, elle est rejetée, avec toutes les cellules suivantes du paquet, si le tampon est déjà empli au delà du seuil d'EPD. Inversement, si lors de l'arrivée de la première cellule le seuil d'EPD dans le tampon n'est pas atteint, la cellule est acceptée - ce qui ne préjuge pas de l'acceptation des cellules suivantes du paquet.

Ces solutions ne sont pas pleinement satisfaisantes. Le TPD n'est pas optimal, dans la mesure où il est possible d'accepter la plupart des cellules d'un paquet, et de devoir néanmoins retransmettre l'ensemble du paquet si les dernières cellules sont rejetées; l'EPD est peu efficace dans une file d'attente de petite taille, ou en cas de charge importante du noeud de transmission. En outre, la fixation du seuil d'EPD est difficile, car ce seuil est sensible à la taille des paquets, et à leur processus d'arrivée. On utilise généralement pour fixer le seuil d'EPD des informations statistiques sur les tailles et les arrivées des cellules.

US 5 724 513 décrit une fonction police, qui consiste à ramener le débit à une valeur égale à la valeur fixée par le contrat de qualité de service (QoS), si jamais la source ne respecte pas le contrat.

Il a aussi été proposé un modèle de service de la couche ATM, appelé ABT/IT (ATM Block Transfer with Immediate Transmission), qui prévoit la possibilité de marquer des blocs dans la couche ATM. Ces blocs ne sont pas forcément liés à un PDU (protocol data unit ou unité de données du protocole) du niveau supérieur - un paquet dans le cas de l'IP. Ce marquage s'effectue par insertion de cellules RM (Resource Management ou gestion de ressources) qui définissent les extrémités de blocs, et qui portent des informations de débit du bloc transmis entre deux cellules RM successives, et optionnellement des informations de taille du bloc. Ce modèle de service est par exemple décrit dans le document ITU-T Recommandation 1.371, Toronto, septembre 1997, page 19. Il n'est pas mis en oeuvre dans les systèmes actuels, du fait de la complexité nécessaire pour la mise en oeuvre de cette solution en réseau. En outre, l'insertion de cellules RM induit une augmentation du trafic (overhead).

L'invention propose une solution de contrôle de congestion pour un noeud ATM, qui permette un contrôle plus efficace que les solutions d'EPD et de TPD connues, et qui soit d'une mise en oeuvre plus simple que les solutions de ABT/IT.

Plus précisément, l'invention propose un procédé de contrôle de congestion dans un noeud d'un système de transmission asynchrone, dans lequel sont transmises des cellules, caractérisé en ce qu'il consiste à :

- évaluer le débit de la connexion à partir du débit crête qui a été négocié pour la connexion,
- évaluer le débit dit disponible que peut accepter le noeud, à l'instant considéré,
- comparer ces deux débits, et accepter ou rejeter des cellules en fonction du résultat de cette comparaison.

Dans un mode de réalisation particulier, le procédé est appliqué à des cellules qui forment des paquets, et il est caractérisé en ce qu'il consiste à réaliser ces trois opérations lors de l'arrivée de la première cellule de chaque paquet.

De préférence, le débit disponible sur le noeud est pris égal à la différence entre le débit total maximal que peut accepter le noeud, et la somme des débits des connexions des paquets en cours de transmission par le noeud.

Avantageusement, les paquets en cours de transmission par le noeud sont les paquets dont la dernière cellule n'a pas été transmise.

Dans un autre mode de réalisation, les paquets en cours de transmission par le noeud comprennent les paquets dont la dernière cellule n'a pas été transmise et les paquets dont la dernière cellule a été transmise depuis une durée inférieure à la durée moyenne entre cellules du paquet.

De préférence, le procédé comprend l'introduction d'espaceurs sur au moins une connexion, et l'évaluation du débit de la dite connexion est corrigée en fonction de l'introduction des dits espaceurs.

On peut aussi prévoir le rejet de toutes les cellules d'un paquet dont la première cellule a été rejetée.

D'autres caractéristiques et avantages de l'invention apparaîtront à la lecture de la description qui suit de modes de réalisation de l'invention, donnée à titre d'exemple et en référence aux dessins annexés qui montrent:

- figure 1, un schéma d'une mémoire tampon située dans un noeud d'un réseau ATM, dans laquelle l'invention peut être mise en oeuvre;
- figure 2, une représentation un ordinogramme du procédé mis en oeuvre à la réception d'une cellule;
- figure 3 à 8, des résultats de simulation de l'invention.

L'invention propose d'utiliser, pour le contrôle de la congestion, des informations de débit implicites, qui ne sont pas véhiculées par les cellules ATM, mais qui sont déduites des informations de débit négociées lors de l'établissement des connexions.

En effet, lors de l'établissement d'une connexion dans un système ATM, est négocié pour la connexion un débit crête ou PCR (Peak Cell Rate), qui correspond au débit maximal autorisé pour la connexion en cause. Il s'avère expérimentalement que les cellules dans un paquet sont généralement émises au débit offert à un terminal, i. e. sensiblement au débit crête négocié pour la connexion.

Alternativement, il est possible, sur une connexion donnée, de réduire le débit des cellules pour mieux exploiter les capacités d'une ligne de transmission, en introduisant des espaceurs de cellules, en entrée du réseau; cette solution est décrite dans la demande de brevet français FR-A-2 653 285 ayant pour titre "Dispositif d'évaluation du débit de circuits virtuels empruntant une voie de transmission à multiplexage temporel axynchrone"; on pourra se reporter à cette demande pour plus de précisions quant à la nature de la transformation prévue. Dans un tel cas, l'invention propose de considérer non pas le débit négocié correspondant au PCR, mais le débit réduit noté dans la suite PCR'. L'un comme l'autre sont des paramètres du système connus localement pour les différentes connexions.

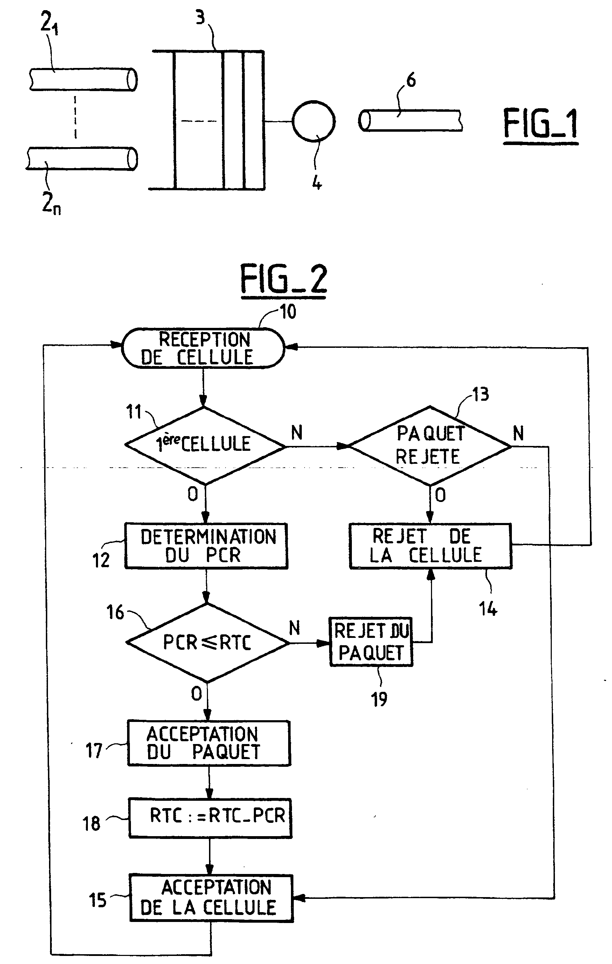

La figure 1 montre un schéma d'une mémoire tampon d'un noeud d'un réseau ATM, dans laquelle l'invention peut être mise en oeuvre; la figure 1 montre un ensemble de connexions entrantes $2_1$ à $2_n$, un tampon 3, et un serveur 4 qui transmet les cellules contenues dans le tampon sur une ligne 6 de débit de ligne connu. Lors de l'arrivée d'une nouvelle cellule d'un nouveau paquet sur une connexion donnée, l'invention propose de considérer le débit requis pour la connexion sur laquelle arrive cette cellule, et de comparer ce débit au débit restant du serveur ou RTC (acronyme de l'anglais Remaining Transmission Capacity, ou capacité de transmission restante) du serveur.

Le RTC est calculé à partir du débit du serveur, localement connu, et de la somme des débits des connexions actives, i. e. de la somme des débits négociés PCR ou PCR' de chacune des connexions pour lesquels des paquets sont en cours de transmission. Il convient de noter que si un paquet précédemment reçu a été rejeté, l'information de débit correspondante n'est pas prise en compte pour le calcul du RTC. Le RTC ainsi calculé est comparé au débit requis pour la connexion nouvelle; s'il s'avère que le serveur dispose encore d'une capacité supérieure au débit requis, la cellule est acceptée, et le RTC est diminué d'autant. Sinon, la cellule est rejetée, et toutes les cellules suivantes du paquet le sont aussi.

La figure 2 montre en détail un ordinogramme du procédé mis en oeuvre à la réception d'une cellule. A l'étape 10, on reçoit une cellule; on passe à l'étape 11 après la réception d'une cellule. A l'étape 11, on détermine si la cellule entrante est la première cellule d'un nouveau paquet; une nouvelle cellule d'un nouveau paquet qui arrive en entrée sur le noeud est identifiée comme nouvelle cellule, par exemple grâce au bit AUU de la cellule précédente. Si tel est le cas, on passe à l'étape 12, et sinon, on passe à l'étape 13.

A l'étape 13, on est en présence d'une cellule d'un paquet dont la première cellule est déjà arrivée; on détermine si la première cellule a été rejetée, par consultation du bit d'activation; si tel est le cas, on passe à l'étape 14, où la cellule est aussi rejetée; en effet, comme dans le TPD, il n'est pas utile de continuer à transmettre des cellules d'un paquet qui arrivera en tout état de cause incomplet. Après l'étape 14, on revient à l'étape 10 pour la cellule suivante. Sinon, on passe à l'étape 15, où la cellule est acceptée, sauf débordement du tampon.

A l'étape 12, on est en présence d'une première cellule de paquet. On détermine alors le débit implicite, PCR, par consultation des tables système, à partir du VPVC de la cellule, et on passe à l'étape 16. Le cas échéant, ce PCR est corrigé, comme expliqué plus haut.

A l'étape 16, on compare le PCR déterminé à l'étape 12 au RTC. Si le PCR est inférieur ou égal au RTC, on passe à l'étape 17. Sinon, on passe à l'étape 19.

A l'étape 17, on suppose que le paquet est accepté, et on met à jour le bit d'activation correspondant, à une première valeur logique, de telle sorte que les cellules suivantes soient aussi acceptées. On passe ensuite à l'étape 18.

A l'étape 18, on met à jour le RTC, pour prendre en compte l'acceptation de la cellule, et donc l'utilisation de capacités correspondant au débit PCR. On calcule un nouveau RTC par la formule:

$$RTC = RTC - PCR$$

On passe ensuite à l'étape 15 où la cellule est acceptée, sauf débordement du tampon; on repasse ensuite à l'étape 10, pour attendre la cellule suivante.

A l'étape 19, on se trouve en présence d'une première cellule de paquet, qui est destinée à être rejetée dans la mesure où les capacités du noeud ne permettent pas de garantir son acheminement. On met à jour le bit d'activation, à une deuxième valeur logique, de sorte que les cellules suivantes soient rejetées à l'étape 13. On passe ensuite à l'étape 14. La mise à jour du bit d'activation permet de rejeter les cellules suivantes du paquet.

L'invention permet ainsi à tout instant de prévoir l'utilisation des ressources du noeud de transmission. Elle fournit une solution indépendante de la taille des paquets. Elle ne préjuge pas du débordement du tampon; toutefois, un débordement du tampon est improbable.

On décrit maintenant la mise à jour du RTC lorsque l'on reçoit la dernière cellule d'un paquet, identifiée par un bit AUU. Lors de la réception d'une telle cellule, si le paquet correspondant a été rejeté, il convient simplement de mettre à une valeur logique donnée un bit permettant de repérer que la cellule suivante est une première cellule de paquet. Ceci assure que le paquet suivant pourra être traité et acheminé, si les ressources sont de nouveau disponibles.

Au contraire, si le paquet correspondant à la dernière cellule a été accepté, il convient de mettre à une valeur logique donnée un bit permettant de repérer que la cellule suivante est une première cellule de paquet, et en outre de mettre à jour le RTC, pour indiquer que l'ensemble du paquet a été acheminé, et que la ressource correspondante peut être utilisée pour un autre paquet. Deux modes de réalisation sont possibles. Dans un premier mode de réalisation, on calcule un nouveau RTC, par la formule suivante, dès la réception de la cellule de fin de paquet:

$$RTC = RTC + PCR,$$

où PCR est le débit pour la connexion portant la cellule. Ce mode de réalisation, appelé relâchement immédiat, présente l'avantage de la simplicité.

Dans un autre mode de réalisation, on calcule un nouveau RTC, par la même formule, mais après avoir attendu un temps correspondant à l'intervalle entre les arrivées des cellules du paquet, i. e. après un temps 1/PCR. Cette solution présente une meilleure sécurité, notamment en cas de paquets de petite taille, et évite tout remplissage intempestif du tampon. De fait, le relâchement différé selon ce mode de réalisation permet d'éviter tout relâchement avant la transmission effective de la cellule.

Le mode de réalisation à relâchement immédiat reste acceptable pour des tailles de paquets correspondant aux tailles de paquet de l'IP, à savoir de 30 à 200 cellules. Le fait de ne pas allouer de ressources sur la dernière cellule est acceptable au vu de la capacité de charge du serveur, qui est toujours différente de 100%.

Dans un cas comme dans l'autre, on comprend comment le RTC est mis à jour, après le passage d'un paquet, et comment le paquet suivant peut être acheminé. Il convient encore de noter que le RTC, au départ, est initialisé à la capacité du serveur. Il est mis à jour en permanence, en fonction de l'activité du serveur.

La solution de l'invention est plus simple à mettre en oeuvre que l'ABT/IT, dans la mesure où elle utilise des informations déjà présentes, et que les terminaux peuvent exploiter. En outre, l'utilisation d'informations de débit implicites n'induit pas d'augmentation du trafic (overhead). La solution est plus performante que l'EPD, et notamment est plus robuste par rapport à la taille des cellules, et susceptible d'être mise en oeuvre pour des tampons de petite taille. Elle présente un avantage particulier pour les systèmes temps réel, qui travaillent sur des tampons de petite taille.

Avantageusement, le procédé de la figure 2 comme le procédé de relâchement s'effectue au maximum en un temps cellule. On prévoit aussi, si nécessaire, une procédure de réinitialisation périodique, qui permet de survivre à des circonstances du genre: paquet de longueur infini, erreur de calcul du RTC ou autre.

L'invention, grâce à l'utilisation d'informations de débit implicites, permet ainsi de gérer les congestions. Dans la mesure où elle travaille sur les débits, elle est fiable et limite le risque de débordement du tampon.

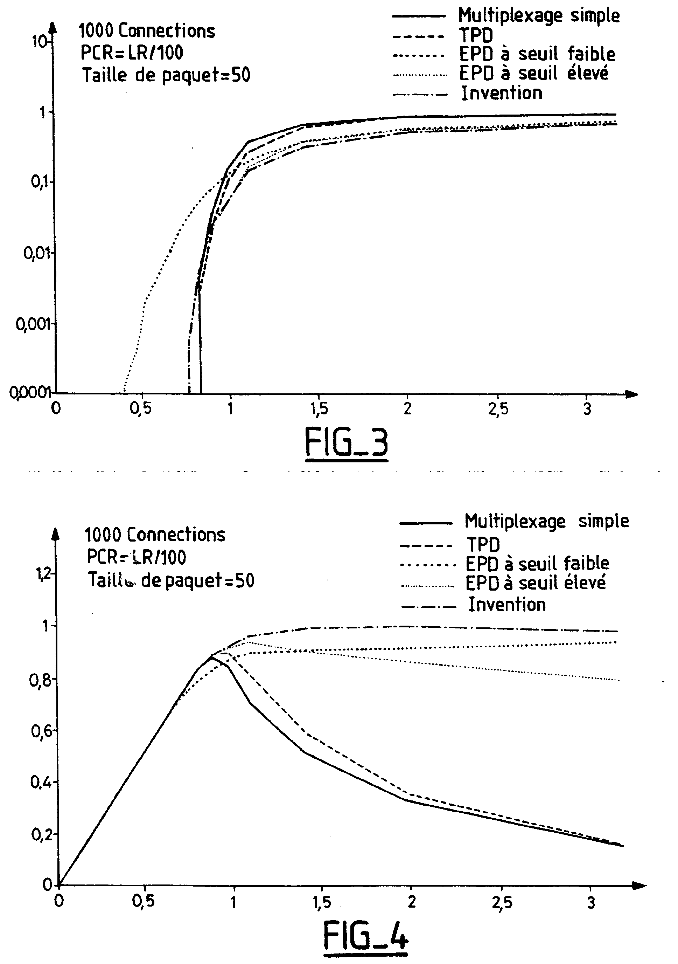

Les figures 3 à 8 montrent des résultats de simulation de l'invention, par comparaison à des mécanismes d'EPD et de TPD. On a utilisé pour les simulation, les hypothèses suivantes:

> 1000 connexions;
> longueur des paquets: 50 cellules ou 1000 cellules;
> PCR des connexions: débit de ligne/100 ou débit de ligne/5;
> taille du tampon: 64 cellules;
> seuil de TPD: 64 cellules;
> seuil d'EPD: 5 ou 50 cellules.

Les résultats sont fournis sous forme d'une part du PER ou taux d'erreur sur les paquets (acronyme de l'anglais Packet Error Ratio), qui est égal au rapport:

$$\text{(nombre de paquets entrants - nombre de paquets transmis) / nombre de paquets entrants.}$$

Le PER est représentatif de l'efficacité du système ATM, de bout en bout.

On utilise d'autre part le critère de charge en sortie du système, ou "goodput", défini comme le rapport:

$$\text{(nombre de paquets intègres en sortie x taille des paquets) /débit de ligne.}$$

Cette charge en sortie est représentative de l'utilisation du système, et du filtrage qu'effectue le mécanisme de contrôle de congestion. Dans la mesure où un système de transmission ATM est constitué d'un grand nombre de noeuds, ce paramètre est important; en effet, il évite que des paquets partiels ne soient acheminés, ce qui ne sert à rien puisqu'un paquet incomplet est retransmis.

Sur chacune des figures, on a représenté, en trait plein, un multiplexage direct, en traits pointillés longs un TPD, en traits pointillés moyens un EPD avec un seuil faible à 5 cellules, en traits pointillés courts un EPD avec un seuil élevé à 50 cellules, et en traits interrompus le procédé de l'invention.

Les figures 3 et 4 donnent le cas d'un PCR faible (débit de ligne/100) et de paquets de petite taille (50 cellules). La figure 3 montre en abscisse la charge en entrée, normalisé par rapport au débit de ligne en sortie; en ordonnées est portée le PER. La figure 4 montre en abscisse la charge en entrée, normalisé par rapport au débit de ligne en sortie; en ordonnées est porté le "goodput".

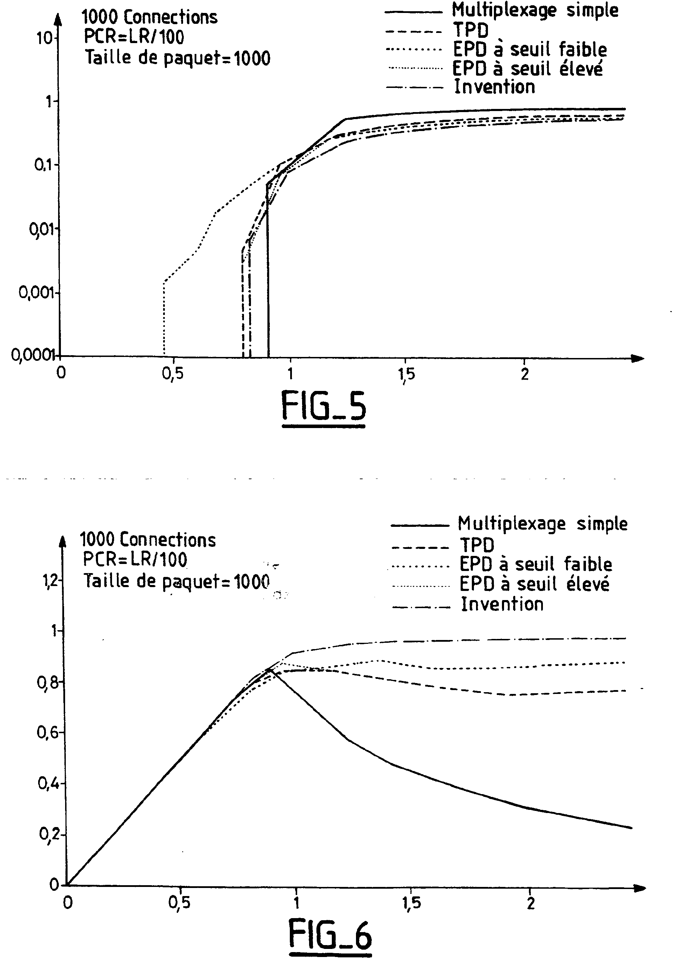

Les figures 5 et 6 sont analogues aux figures 3 et 4, mais pour un PCR élevé (débit de ligne/5), et des paquets de grande taille (1000 cellules).

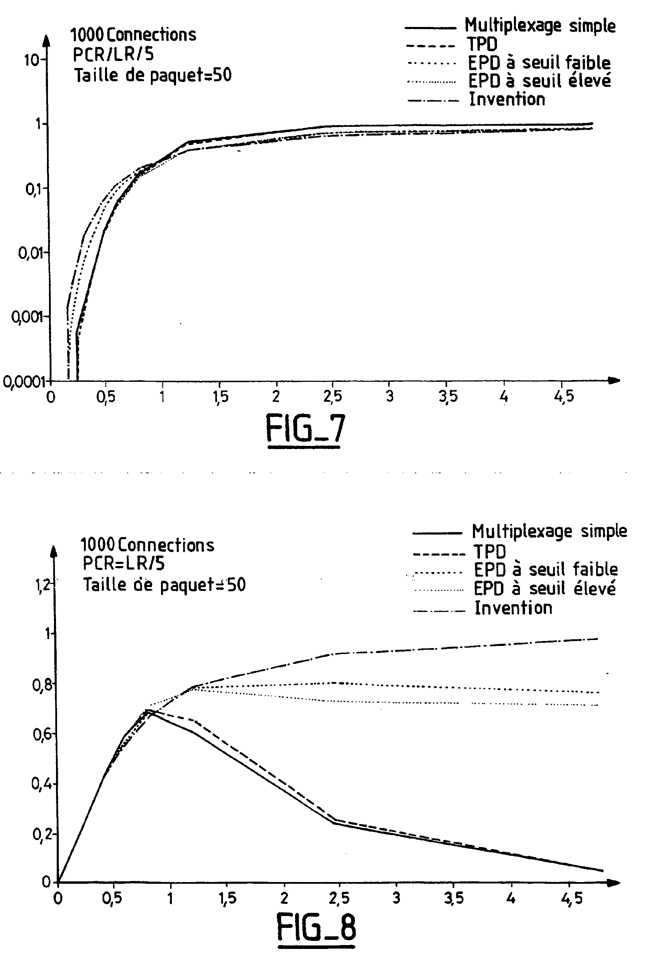

Les figures 7 et 8 sont analogues aux figures 3 et 4, mais pour un PCR élevé (débit de ligne/100), toujours pour des paquets de petite taille (50 cellules).

Les figures 3 à 8 montrent que les mécanismes de TPD ou d'EPD à seuil élevé fonctionnent de manière satisfaisante dans des conditions de charge faible. Toutefois, le procédé de l'invention et dans une moindre mesure l'EPD à seuil faible assurent de meilleurs résultats en forte charge. Le procédé de l'invention assure les meilleurs résultats dans une large plage de conditions de fonctionnement. Il assure aussi les meilleures performances en termes de "goodput".

Bien entendu, la présente invention n'est pas limitée aux exemples et modes de réalisation décrits et représentés, mais elle est susceptible de nombreuses variantes accessibles à l'homme de l'art. Ainsi, elle peut être mise en oeuvre pour des cellules qui ne forment pas des paquets, en mettant en oeuvre à chaque cellule le procédé de l'invention. On peut aussi choisir de ne pas systématiquement rejeter les cellules suivantes d'un paquet, si cela présente une utilité pour une transmission donnée. L'invention peut être combinée avec des mécanismes de gestion de priorité, par exemple en fonction du RTC, en conditionnant l'acceptation d'un paquet à une nature de connexion au dessous d'un certain RTC.

**Revendications**

1. Procédé de contrôle de congestion dans un noeud d'un système de transmission asynchrone, dans lequel sont transmises des cellules,
   **caractérisé en ce qu'**il consiste à :

   - déterminer (12) le débit de la connexion sur laquelle une cellule arrive à partir du débit crête qui a été négocié pour la connexion,
   - évaluer (18) le débit restant que peut accepter le noeud,
   - comparer le débit de la connexion et le débit restant, puis accepter ou
   - comparer le débit de la connexion et le débit restant, puis accepter ou rejeter (16) des cellules en fonction du résultat de cette comparaison.

2. Procédé selon la revendication 1, appliqué à des cellules qui forment des paquets,
   **caractérisé en ce qu'**il consiste à réaliser ces trois opérations lors de l'arrivée de la première cellule de chaque paquet.

3. Procédé selon la revendication 2, **caractérisé en ce que** le débit restant est égal à la différence entre le débit possible du noeud et la somme des débits des connexions des paquets en cours de transmission par le noeud.

4. Procédé selon la revendication 3, **caractérisé en ce que** les paquets en cours de transmission par le noeud sont les paquets dont la dernière cellule n'a pas été transmise.

5. Procédé selon la revendication 3, **caractérisé en ce que** les paquets en cours de transmission par le noeud comprennent les paquets dont la dernière cellule n'a pas été transmise et les paquets dont la dernière cellule a été transmise depuis une durée inférieure à la durée moyenne (1/PCR) entre cellules du paquet.

6. Procédé selon l'une des revendications 1 à 5, **caractérisé en ce qu'**il comprend l'introduction d'espaceurs sur au moins une connexion, et **en ce que** la déduction du débit de la dite connexion est corrigée en fonction de l'introduction des dits espaceurs.

7. Procédé selon l'une des revendications 2 à 6, **caractérisé en ce qu'**il consiste à rejeter toutes les cellules d'un paquet dont la première cellule a été rejetée.

**Claims**

1. A method of controlling congestion in a node of an asynchronous transmission system in which cells are transmitted, the method being **characterized in that** it consists in:

   - determining (12) the cell rate of the connection on which a cell arrives from the peak cell rate negotiated for the connection,
   - evaluating (18) the remaining transmission capacity that the node can accept, and
   - comparing the cell rate of the connection and the remaining transmission capacity, and then accepting or rejecting (16) cells according to the result of the comparison.

2. A method according to claim 1, applied to cells that form packets, **characterized in that** it consists in performing these three operations when the first cell of each packet arrives.

3. A method according to claim 2, **characterized in that** the remaining transmission capacity is equal to the difference between the possible cell rate that the node can accept and the sum of the cell rates of the packets in process of transmission via the node.

4. A method according to claim 3, **characterized in that** the packets in process of transmission via the node are packets whose last cell has not been transmitted.

5. A method according to claim 3, **characterized in that** the packets in process of transmission via the node comprise packets whose last cell has not been transmitted and packets whose last cell has been transmitted in a time period less than the average time period (1/PCR) between cells of the packet.

6. A method according to any one of claims 1 to 5, **characterized in that** it comprises inserting spacers into at least one connection and **in that** the deduction of the peak cell rate of said connection is corrected to allow for the introduction of said spacers.

7. A method according to any one of claims 2 to 6, **characterized in that** it consists in rejecting all the cells of a packet whose first cell has been rejected.

**Patentansprüche**

1. Verfahren zur Überlastungsregelung in einem Knoten eines asynchronen Übertragungssystems, in welchem Zellen übertragen werden, **dadurch gekennzeichnet, dass** es darin besteht:

   - die Bitrate der Verbindung, auf welcher eine Zelle ankommt, auf der Basis der für die Verbindung verhandelte Spitzenbitrate zu ermitteln (12),
   - die restlichen Bitraten, die der Knoten aufnehmen kann, zu bewerten (18),
   - die Bitrate der Verbindung mit den restlichen Bitraten zu vergleichen und die Zellen entsprechend dem Ergebnis dieses Vergleichs anzunehmen oder zu verwerfen (16).

2. Verfahren nach Anspruch 1, angewendet auf Zellen, die ein Paket bilden, **dadurch gekennzeichnet, dass** es darin besteht, diese drei Vorgänge bei Ankunft der ersten Zelle jedes Pakets durchzuführen.

3. Verfahren nach Anspruch 2, **dadurch gekennzeichnet, dass** die restlichen Bitraten der Differenz zwischen den möglichen Bitraten des Knotens und der Summe der Bitraten der Verbindungen der Pakete, welche gegenwärtig durch den Knoten übertragen werden, entsprechen.

4. Verfahren nach Anspruch 3, **dadurch gekennzeichnet, dass** die Pakete, die gegenwärtig durch den Knoten übertragen werden, Pakete sind, deren letzte Zelle nicht übertragen wurde.

5. Verfahren nach Anspruch 3, **dadurch gekennzeichnet, dass** die Pakete, welche gegenwärtig durch den Knoten übertragen werden, die Pakete, deren letzte Zelle nicht übertragen wurde, und die Pakete, deren letzte Zelle seit einem zeitlichen Abstand, der niedriger ist als der durchschnittliche zeitliche Abstand (1/PCR) zwischen Zellen des Pakets, übertragen wurde, umfassen.

6. Verfahren nach einem der Ansprüche 1 bis 5, **dadurch gekennzeichnet, dass** es den Einsatz von Abstandhaltern auf mindestens einer Verbindung umfasst, und **dadurch**, **dass** der Abzug der Bitrate der besagten Verbindung entsprechend dem Einsatz der besagten Abstandshalter korrigiert wird.

7. Verfahren nach einem der Ansprüche 2 bis 6, **dadurch gekennzeichnet, dass** es darin besteht, alle Zellen eines Pakets, dessen erste Zelle verworfen wurde, zu verwerfen.

FIG_1

FIG_2

RECEPTION DE CELLULE — 10

11 — 1ère CELLULE — N → PAQUET REJETE — 13 — N

O

12 — DETERMINATION DU PCR

REJET DE LA CELLULE — 14

O

16 — PCR ≤ RTC — N → REJET DU PAQUET — 19

O

17 — ACCEPTATION DU PAQUET

18 — RTC := RTC_PCR

15 — ACCEPTATION DE LA CELLULE

FIG_3

FIG_4

FIG_5

FIG_6

FIG_7

FIG_8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5724513 A

- FR 2653285 A